Europäisches Patentamt

European Patent Office

Office européen des brevets

(19)

(11) Veröffentlichungsnummer: **0 213 582**
**B1**

(12) **EUROPÄISCHE PATENTSCHRIFT**

(45) Veröffentlichungstag der Patentschrift: **04.07.90**

(51) Int. Cl.⁵: **A 21 C 5/04**

(21) Anmeldenummer: **86111711.7**

(22) Anmeldetag: **23.08.86**

(54) **Teigteilmaschine.**

(30) Priorität: **28.08.85 DE 3530724**

(43) Veröffentlichungstag der Anmeldung:
**11.03.87 Patentblatt 87/11**

(45) Bekanntmachung des Hinweises auf die
Patenterteilung:
**04.07.90 Patentblatt 90/27**

(84) Benannte Vertragsstaaten:
**AT BE CH GB IT LI NL SE**

(56) Entgegenhaltungen:
DE-C- 183 138
FR-A-1 266 819
GB-A- 14 786
GB-A-1 008 472
US-A-2 515 125

(73) Patentinhaber: **Werner & Pfleiderer**
**Theodorstrasse 10 Postfach 30 12 20**
**D-7000 Stuttgart 30 (DE)**

(72) Erfinder: **Judex, Helmut**
**Hofpfad 27**
**D-7141 Schwieberdingen (DE)**

Courier Press, Leamington Spa, England.

## Beschreibung

Die Erfindung betrifft eine Teigteilmaschine nach dem Oberbegriff des Patentanspruches 1.

Bei Teigteilmaschinen mit einem Teilkammerträger, der in einer Reihe nebeneinander angeordnete Teilkammern aufweist, werden bei einem Teilvorgang normalerweise so viele Teigstücke erzeugt, wie es der Anzahl der in einer Reihe befindlichen Teilkammern entspricht. Wenn also ein Teilkammerträger beispielsweise sechs Teilkammern nebeneinander aufweist, werden auch jeweils sechs Teigstücke abgeteilt. In manchen Fällen wird nun nicht die volle Kapazität der Teigteilmaschine benötigt, sondern es genügt, wenn im genannten Beispiel jeweils nur fünf oder nur vier Teigstücke abgeteilt werden. Diesem Umstand könnte dadurch Rechnung getragen werden, daß der Teilkammerträger mit sechs Teilkammern gegen einen solchen mit fünf oder vier Teilkammern ausgetauscht wird. Weil ein derartiger Austausch einen erheblichen Aufwand an Arbeit und die Bereitstellung von Austauschteilen erfordert, ist man dazu übergegangen, einen Teilkammerträger mit der größten in Betracht kommenden Anzahl von Teilkammern—im Beispielsfall sechs—zu verwenden und bei Bedarf eine oder mehrere Teilkammern außer Betrieb zu setzen. Bei einer aus der Praxis bekannten Methode geschieht dies dadurch, daß man den Meßkolben aus der stillzusetzenden Teilkammer entfernt und statt dessen einen die Öffnung der Teilkammer bündig verschließenden Pfropfen einbaut, der in dieser Lage durch eine Spreizvorrichtung festgehalten wird. Auch dazu bedarf es eines erheblichen Arbeits- und Materialaufwands, der jedoch bedeutend geringer ist als bei einem Austausch der kompletten Teilkammerträger.

Eine andere Methode zum Stillsetzen einer Teilkammer ist aus der DE-A-1 632 357 bekannt. Dabei wird der Meßkolben nicht aus der Teilkammer entfernt und gegen einen Pfropfen ausgetauscht, sondern der Meßkolben bleibt in der Teilkammer und wird in seiner mit der Stirnseite des Teilkammerträgers bündigen Stellung verriegelt. Zu diesem Zweck ist bei jedem der mit einer speziell gestalteten Kolbenstange versehenen Meßkolben eine Verschraubung vorgesehen, mittels welcher die Kolbenstange und mit ihr der Meßkolben gegen den Teilkammerträger bzw. dessen Welle verspannt wird. Obwohl bei der bekannten Teigteilmaschine sich die Bevorratung besonderer Austauschteile zum Verschließen der Teilkammermündungen erübrigt, ist das Betätigen der an jedem Meßkolben vorgesehenen Verschraubung sehr zeitraubend und wegen ihrer Anordnung im Innern der Teilkammern nur unter Verwendung von Spezialwerkzeugen möglich. Bei fliegend angeordneten Meßkolben läßt sich diese Methode wegen des Fehlens der Kolbenstangen ohnehin nicht anwenden.

Der Erfindung liegt die Aufgabe zugrunde, bei einer Teigteilmaschine der im Oberbegriff des Patentanspruches 1 erwähnten Gattung das Außerbetriebsetzen einer oder mehrerer Teilkammern noch weiter zu vereinfachen.

Diese Aufgabe wird erfindungsgemäß durch die im Kennzeichnungsteil des Patentanspruches 1 angegebenen Merkmale gelöst. Dabei wird der Vorteil erreicht, daß durch nur einen Anschlag einerseits der Hub der in Betrieb befindlichen Meßkolben in ihrer mit der Stirnseite des Teilkammerträgers bündigen Stellung begrenzt wird und andererseits die Meßkolben der außer Betrieb gesetzten Teilkammern in derselben Stellung verriegelbar sind. Insbesondere bei Teilkammern mit kreisförmigem Querschnitt läßt sich, nachdem der Anschlag gelöst und in eine Position außerhalb der Teilkammer gebracht ist, durch einfaches Verdrehen des Meßkolbens um einen dem umfänglichen Versatz der ersten und zweiten Vertiefung entsprechenden Winkel die Einstellung des Meßkolbens in die Verriegelungs- oder Arbeitsstellung vornehmen. Danach braucht nur noch der Anschlag eingerastet zu werden und schon ist die Maschine wieder betriebsbereit.

Durch die Merkmale des Patentanspruches 2 ist die Verriegelung der Meßkolben in ihrer mit der Stirnseite des Teilkammerträgers bündigen Stellung auch dann gewährleistet, wenn der Teilkammerträger als walzenförmiger Körper gestaltet ist, in dem die Teilkammern als radiale Durchbrüche vorgesehen sind.

Bei der Gestaltung der Vertiefungen nach den Merkmalen der Patentansprüche 3 und 4 lassen sich die Meßkolben in einfacher Weise fertigen. Außerdem braucht bei Meßkolben mit kreisförmigem Querschnitt das Verdrehen in die Verriegelungs- oder Arbeitsstellung nur grob vorgenommen zu werden. Die genaue Ausrichtung in Umfangsrichtung erfolgt dann beim Festspannen des Anschlags automatisch.

Durch die Merkmale des Patentanspruches 5 wird die Umstellung mehrerer Meßkolben von Arbeits- in Verriegelungsstellung und umgekehrt erleichtert, weil nur ein Anschlag gelöst zu werden braucht.

Die Merkmale der Patentansprüche 6 und 7 ermöglichen eine leichte Zugänglichkeit und einfache Handhabung des Anschlags.

Durch die Merkmale des Patentanspruches 8 wird ein automatisches Abheben des Anschlags bei Lösen seiner Befestigung erzielt.

Ein Ausführungsbeispiel der Erfindung wird nachstehend anhand der Zeichnungen beschrieben. Es zeigt

Fig. 1 einen senkrechten Schnitt durch eine Teigteilmaschine,

Fig. 2 die teilweise aufgebrochene Seitenansicht eines Teils der Teigteilmaschine gemäß Fig. 1 von rechts her gesehen und

Fig. 3 einen Schnitt nach der Linie III-III in Fig. 2.

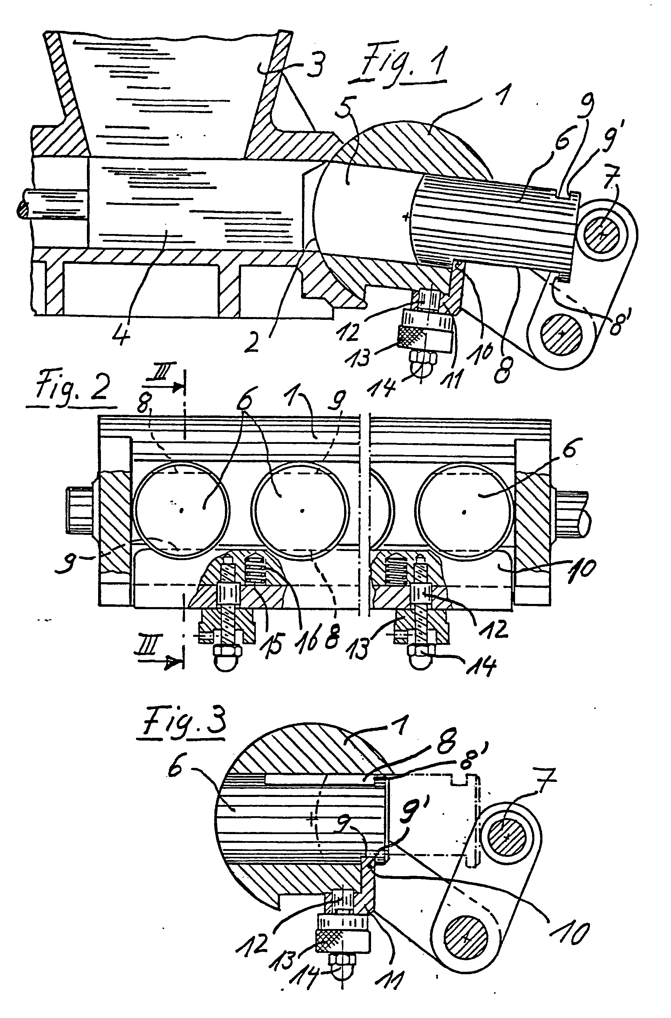

Die aus Fig. 1 ersichtliche Teigteilmaschine weist einen Teilkammerträger 1 auf, der gegenüber dem Auslaß 2 einer Teigzuführung hin- und herbeweglich ist. Die Teigzuführung besteht im Beispielsfall aus einem Teigtrichter 3 sowie einem Teigförderkolben 4, der sich in einer unterhalb des Teigtrichters 3 befindlichen Kammer vor- und zurückbewegt. Der vom Teigförderkolben 4 bei desssen Rückwärtshub aus dem Teigtrichter 3 angesaugte Teig wird beim Vorwärtshub in die Teilkammern 5 des Teilkammerträgers 1 gepreßt. Die Teilkammern 5 sind in einer Reihe nebeneinander im Teilkammerträger 1 angeordnet. Jede von ihnen weist einen fliegend angeordneten Meßkolben 6 auf, der mit seiner Rückseite an einer mit Rollen besetzten und am Teilkammerträger 1 schwenkbar befestigten Auswerferstange 7 anstößt. Mittels der Auswerferstange 7 werden die Meßkolben 6, nachdem die Teilkammern 5 mit Teig gefüllt und durch eine 90° Drehung des Teilkammerträgers 1 mit ihrer Mündung nach unten gerichtet sind, bis in ihre mit der Stirnseite des Teilkammerträgers 1 bündige Stellung bewegt, wobei der Teig aus den Teilkammern 5 ausgestoßen und beim Zurückschwenken des Teilkammerträgers 1 von der Vorderseite der Meßkolben 6 abgestreift wird. Die Auswerferstange 7 wirkt als rückseitiger Anschlag der Meßkolben 6 und dient zur Einstellung von deren Hub und damit des von den Teilkammern 5 aufzunehmenden Teigvolumens.

Die Meßkolben 6 weisen am Umfang eine sich achsparallel erstreckende erste Vertiefung 8 auf, die eine dem größten Hub entsprechende Längehatundalsene am Kolbenumfang angebrachte Abflachung gestaltet ist. In Umfangsrichtung versetzt, und zwar diametral zur ersten Vertiefung 8, ist am Umfang eines jeden Meßkolbens 6 eine zweite Vertiefung 9 in Gestalt einer tangential eingeschnittenen Nut vorgesehen. Die rückwärtigen Begrenzungen der Vertiefungen 8, 9 sind mit 8' und 9' bezeichnet und befinden sich bei jedem Meßkolben 6 in derselben Radialebene.

Die Vertiefungen 8, 9 wirken alternativ mit einem am Teilkammerträger 1 lösbar befestigten Anschlag 10 zusammen. Der Anschlag 10 ist als eine über sämtliche Teilkammern 5 reichende Leiste gestaltet, deren obere Kante um eine dem radialen Ausmaß der Vertiefungen entsprechendes Maß in die Teilkammern 5 hineinragt. Wenn der Anschlag 10 in die erste Vertiefung 8 eines Meßkolbens 6 eingreift, kann sich der betreffende Meßkolben über die maximale Hublänge bewegen, wobei die Anordnung so getroffen ist, daß die rückwärtige Begrenzung 8' gegen den Anschlag 10 stößt, sobald die Vorderseite des Meßkolbens 6 ihre mit der Stirnseite des Teilkammerträgers 1 bündige Stellung erreicht (Fig. 1). Damit wird verhindert, daß beim Ausstoßen des Teiges die Meßkolben 6 über die periphere des Teilkammerträgers 1 hinausragen. Wenn hingegen der Anschlag 10 in die zweite Vertiefung 9 eingreift, ist der jeweilige Meßkolben 6 in seiner mit der Stirnseite des Teilkammerträgers 1 bündigen Stellung verriegelt, weil die achsparallele Erstreckungen der zweiten Vertiefung 9 und des Anschlags 10 gleich sind und die rückwärtige Begrenzung 9' sich mit der rückwärtigen Begrenzung 8' der ersten Vertiefung 8 in derselben Radialebene befindet (Fig. 3).

Der als Leiste gestaltete Anschlag 10 weist einen im rechten Winkel abstehenden Schenkel 11 auf, mit dem er an der Unterseite des Teilkammerträgers 1 befestigt ist. Mittels des Schenkels 11 ist der Anschlag 10 auf zur gemeinsamen Mittelebene der Teilkammern senkrechten Stehbolzen 12 geführt. Die äußeren Verlängerungen der Stehbolzen 12 sind mit Gewinde versehen und tragen je eine Rändelmutter 13.

Auf den Enden der Gewindeabschnitte der Stehkolben 12 sind Hutmuttern 14 fest aufgeschraubt. Zwischen der Rändelmutter 13 und der Hutmutter 14 ist jeweils eine freie Gewindestrecke vorgesehen, deren Länge dem radialen Eingriff des Anschlages 10 in die Teilkammern 5 entspricht. An der Unterseite des Teilkammerträgers 1 sind auf den Schenkel 11 des Anschlags 10 einwirkende Druckfedern 15 in jeweils einer Bohrung 16 angeordnet.

Geht man von einer Situation aus, bei der sämtliche Teilkammern 5 wie in Fig. 1 dargestellt in Betrieb sind und soll nun die in Fig. 2 links außen befindliche Teilkammer außer Betrieb genommen werden, so sind die Rändelmuttern 13 bis zur Anlage an den Hutmuttern 14 zu lösen. Unter der Wirkung der Druckfedern 15 hebt sich dabei der Schenkel 11 von der Unterseite des Teilkammerträgers 1 ab und der Anschlag 10 gelangt außer Eingriff von der ersten Vertiefung 8. Während dieses Vorgangs bleibt der Anschlag 10 mittels des Schenkels 11 auf den Stehbolzen 12 geführt, so daß keine Verkantungen auftreten können. Dann wird der Meßkolben 6 der außer Betrieb zu nehmenden Teilkammer 5 um 180° um seine Längsache gedreht, was ebenso wie das Drehen der Rändelmuttern 13 ohne weiteres von Hand geschehen kann. Jetzt braucht nur noch der Meßkolben 6 in die mit der Stirnseite des Teilkammerträgers 1 bündige Stellung geschoben zu werden - falls er sich dort nicht schon vorher befand - und die Rändelmuttern 13 angezogen zu werden, um die Verriegelung des Meßkolbens 6 wie in Fig. 3 dargestellt zu vollenden. Neben dem verriegelten Meßkolben 6 ist in Fig. 3 mit strichpunktierten Linien noch ein Meßkolben dargestellt, der zu einer im Betrieb befindlichen Teilkammer gehört und sich an der Auswerferstange 7 abstützt.

Statt der aus den Zeichnungen ersichtlichen Gestaltung des Teilkammerträgers 1 als walzenförmiger Körper könnte als Ausführungsbeispiel der Erfindung auch ein Teilkammerträger in Gestalt einer gegenüber dem Auslaß 2 der Teigzuführung senkrecht auf- und abbeweglichen und eine Reihe von Teilkammern 5 tragenden Schieberplatte vorgesehen sein.

## Patentansprüche

1. Teigteilmaschine mit einem Teilkammerträger (1), der mit seiner Stirnseite gegenüber dem Auslaß (2) einer Teigzuführung (3, 4) hin- und herbeweglich ist und in dessen in einer Reihe nebeneinander angeordneten Teilkammern (5) sich je ein Meßkolben (6) befindet, wobei nach Bedarf eine oder mehrere Teilkammern (5) außer Betrieb setzbar sind, indem die darin befindlichen Meßkolben (6) in ihrer mit der Stirnseite des Teilkammerträgers (1) bündigen Stellung verriegelt werden, dadurch gekennzeichnet, daß die Meßkolben (6) am Umfang eine sich achsparallel über eine dem größten Hub entsprechende Länge erstreckende erste Vertiefung (8), in die ein am Teilkammerträger (1) lösbar befestigter, den Hub in der mit der Stirnseite des Teilkammerträgers (1) bündigen Stellung begrenzender Anschlag (10) eingreift, sowie eine in Umfangsrichtung versetzt angeordnete, mit dem Anschlag (10) alternativ in Eingriff zu bringende und dessen achsparalleler Erstreckung entsprechende zweite Vertiefung (9) aufweisen, wobei sich die rückwärtigen Begrenzungen (8', 9') der Vertiefungen (8, 9) in derselben Radialebene befinden.

2. Teigteilmaschine nach Anspruch 1, dadurch gekennzeichnet, daß die zweite Vertiefung (9) diametral zur ersten Vertiefung (8) am Umfang eines Meßkolbens (6) angeordnet ist.

3. Teigteilmaschine nach Anspruch 1 oder 2, dadurch gekennzeichnet, daß die erste Vertiefung (8) eine Abflachung am Umfang eines Meßkolbens (6) ist.

4. Teigteilmaschine nach einem der Ansprüche 1 bis 3, dadurch gekennzeichnet, daß die zweite Vertiefung (9), durch eine tangential am Umfang eines Meßkolbens (6) angebrachte Nut gebildet ist.

5. Teigteilmaschine nach Anspruch 3 und 4, dadurch gekennzeichnet, daß der Anschlag (10) eine über sämtliche Teilkammern (5) reichende Leiste ist.

6. Teigteilmaschine nach Anspruch 5, dadurch gekennzeichnet, daß der Anschlag (10) einen im rechten Winkel abstehenden Schenkel (11) aufweist, mit dem er an der Unterseite des Teilkammerträgers (1) befestigt ist.

7. Teigteilmaschine nach Anspruch 6, dadurch gekennzeichnet, daß der Anschlag (10) mittels des Schenkels (11) auf zur gemeinsamen Mittelebene der Teilkammern (5) senkrechten Stehbolzen (12) geführt ist.

8. Teigteilmaschine nach Anspruch 6 oder 7, dadurch gekennzeichnet, daß an der Unterseite des Teilkammerträgers (1) auf den Schenkel (11) des Anschlags (10) einwirkende Druckfedern (15) angeordnet sind.

**Revendications**

1. Machine à diviser la pâte comportant un corps (1) qui contient des chambres diviseuses, dont la face frontale va et vient en face de l'orifice de sortie (2) d'un dispositif (3, 4) d'alimentation en pâte et dans chacune des chambres diviseuses (5), disposées côte à côte sur un rang, duquel se trouve un piston doseur (6), une ou plusieurs de ce ces chambres (5) pouvant être au besoin mise(s) hors service par verrouillage du piston (6) qui s'y trouve dans sa position d'affleurement avec la face frontale du corps (1), machine caractérisée en ce que les pistons doseurs (6) comportent sur leur périphérie une première encoche (8), qui se prolonge parallèlement à l'axe sur une longueur correspondant à la course maximale et dans laquelle s'engage une butée (10), limitant cette course à la position d'affleurement avec la face frontale du corps (1), ainsi qu'une seconde encoche (9), qui est décalée dans le sens circonférentiel, qui est destinée à être mise en prise alternativement avec la butée (10) et dont la largeur, parallèlement à l'axe, correspond à celle de cette butée, les flancs (8', 9') qui limitent ces encoches (8, 9) à l'arrière se trouvant dans le même plan radial.

2. Machine à diviser la pâte selon la revendication 1, caractérisée en ce que la seconde encoche (9) est diamétralement opposée à la première (8) sur la périphérie d'un piston doseur (6).

3. Machine à diviser la pâte selon la revendication 1 ou 2, caractérisé en ce que la première encoche (8) est formée par un méplat sur la périphérie d'un piston doseur (6).

4. Machine à diviser la pâte selon l'une des revendications 1 à 3, caractérisée en ce que la seconde encoche (9) est formée par une rainure usinée tangentiellement sur la périphérie d'un piston doseur (6).

5. Machine à diviser la pâte selon les revendications 3 et 4, caractérisée en ce que la butée (10) est une barrette qui monte plus haut que le fond de toutes les chambres diviseuses (5).

6. Machine à diviser la pâte selon la revendication 5, caractérisée en ce que la butée (10) comporte une aile (11), qui en part à angle droit et au moyen de laquelle cette butée est fixée au-dessous du corps (1).

7. Machine à diviser la pâte selon la revendication 6, caractérisée en ce que la butée (10) est guidée, par l'intermédiaire de son aile (11), par des goujons (12) perpendiculaires au plan médian commun des chambres diviseuses (5).

8. Machine à diviser la pâte selon la revendication 6 ou 7, caractérisée en ce que des ressorts (15) de compression agissant sur l'aile (11) de la butée (10), sont disposés dans la partie inférieure du corps (1) contenant les chambres diviseuses.

**Claims**

1. Dough-dividing machine with a dividing chamber carrier (1), which is arranged to be movable with its end face to and fro opposite the outlet (2) of a dough feed (3, 4) and has a respective metering piston (6) disposed in each of its dividing chambers (5), which are arranged in a row one beside the other, wherein one or more dividing chambers (5) are puttable out of operation according to need in that the metering pistons (6) disposed therein are locked in their setting flush with the end face of the dividing chamber carrier (1), characterised thereby, that the metering pistons (6) at the circumference display a first depression (8), which extends parallelly to the axis over a length corresponding to the greatest stroke and into which an abutment (10) engages, which is detachably fastened at the dividing chamber carrier (1) and which limits the stroke in the setting flush with the end face of the dividing chamber carrier (1), as well as a second depression (9), which is arranged displaced in circumferential direction, is to be brought alternatively into engagement with the abutment (10) and corresponds to its extent parallel to the axis, wherein the rearward limits (8', 9') of the depressions (8, 9) are situated in the same radial plane.

2. Dough-dividing machine according to claim 1, characterised thereby, that the second depression (9) is arranged diametrally opposite to the first depression (8) at the circumference of a metering piston (6).

3. Dough-dividing machine according to claim 1 or 2, characterised thereby, that the first depression (8) is a flattening at the circumference of a metering piston (6).

4. Dough-dividing machine according to one of the claims 1 to 3, characterised thereby, that the second depression (9) is formed by a groove applied tangentially at the circumference of a metering piston (6).

5. Dough-dividing machine according to claim 3 and 4, characterised thereby, that the abutment (10) is a ledge reaching over all dividing chambers (5).

6. Dough-dividing machine according to claim 5, characterised thereby, that the abutment (10) displays a limb (11), which projects at a right angle and by which it is fastened at the underside of the dividing chamber carrier (1).

7. Dough-dividing machine according to claim 6, characterised thereby, that the abutment (10) is guided by means of the limb (11) on studs (7) perpendicular to the common centre plane of the dividing chambers (5).

8. Dough-dividing machine according to claim 6 or 7, characterised thereby, that compression springs (15) acting on the limb (11) of the abutment (10) are arranged at the underside of the dividing chamber carrier (1).

Fig. 1

Fig. 2

Fig. 3